# EUROPÄISCHE PATENTSCHRIFT

(11) **EP 2 252 487 B1**
(45) Veröffentlichungstag und Bekanntmachung des Hinweises auf die Patenterteilung: **12.10.2011**
(21) Anmeldenummer: 10708947.6
(22) Anmeldetag: 10.02.2010
(51) Int. Cl.: B60S 9/08

(54) **HÖHENVERSTELLBARE STÜTZE FÜR SATTELAUFLIEGER**
HEIGHT-ADJUSTABLE SUPPORT FOR SEMITRAILERS
SELLETTE RÉGLABLE EN HAUTEUR POUR SEMI-REMORQUE

(30) Priorität: 02.03.2009 DE 202009002932 U
(43) Veröffentlichungstag der Anmeldung: 24.11.2010
(73) Patentinhaber: SAF-HOLLAND GmbH, 63856 Bessenbach (DE)
(72) Erfinder: RIEDL, Reinhold, 63897 Miltenberg (DE)
(74) Vertreter: Bauer, Clemens
(86) Internationale Anmeldenummer: PCT/EP2010/051648
(87) Internationale Veröffentlichungsnummer: WO 2010/100017

(56) Entgegenhaltungen:
- EP-A2- 0 513 973
- WO-A1-2008/019973
- DE-U1-202005 018 826
- US-A1- 2006 119 089

## Beschreibung

Die Erfindung bezieht sich auf eine höhenverstellbare Stütze für Sattelauflieger oder dergleichen gemäß dem Oberbegriff des Anspruchs 1.

Derartige Stützen werden paarweise im vorderen Bereich von Sattelaufliegern angeordnet und können im Schnellgang in Abstütz- oder Transportstellung gebracht und erforderlichenfalls im Lastgang zum Anheben einer Teilmasse des Sattelaufliegers benutzt werden. Dabei treibt während des Schnellgangbetriebs jeweils das mit einem Kurbeltrieb gekuppelte Schnellgangzahnrad ein Ritzel an, welches drehfest auf einer darüber liegenden Getriebeabtriebswelle sitzt. Der Kraftfluß wird, wie im Lastgangbetrieb, über ein ebenfalls auf der Abtriebswelle des Getriebes sitzendes Kegelritzel auf ein Tellerrad geführt, um den Spindeltrieb anzutreiben. Aus der WO 2008/019973 ist eine Stütze für Sattelauflieger bekannt, bei welcher für den Kraftfluß nach jeder Zahnradstufe des Schaltgetriebes eine separate Getriebestufe mit Kegelradverzahnung vorhanden ist, wodurch ein erhöhter Schnellgang ermöglicht wird. Bei dieser Stütze ist der Kurbeltrieb höhenmäßig oberhalb des Getriebeausgangszapfens angeordnet. Für Sattelauflieger mit besonders tiefliegenden Rahmen ist daher bei einer derartigen Stütze die Anbaumöglichkeit eingeschränkt.

DE-U-20 2005 018826 offenbart den Oberbegriff des Anspruchs 1.

Der Erfindung liegt die Aufgabe zugrunde, eine höhenverstellbare Stütze für Sattelauflieger vorzusehen, die ein Getriebe mit höhenmäßig unter der Abtriebswelle angeordnetem Kurbeltrieb aufweist und dennoch einen erhöhten Schnellgang aufweist.

Diese Aufgabe wird durch eine höhenverstellbare Stütze für Sattelauflieger oder dergleichen mit den Merkmalen des Anspruchs 1 gelöst. Bevorzugte Ausführungsformen ergeben sich aus den abhängigen Ansprüchen.

Erfindungsgemäß ist eine höhenverstellbare Stütze für Sattelauflieger oder dergleichen vorgesehen, umfassend einen vorzugsweise ortsfest angebrachten bzw. an einem Chassis eines Sattelaufliegers befestigbaren Schaftrohrkörper, ein im Schaftrohrkörper angeordnetes verschiebbares Stützeninnenrohr, an dessen unteren Endbereich ein Fuss befestigt ist und das mit einer Mutter verbunden ist, die sich auf einer Spindel befindet, welche über ein Getriebe antreibbar ist, das einen schaltbaren Stirnzahnraderbereich und Kegelradanordnungen aufweist, wobei ein Schaltungsbereich des Getriebes aus einem Lastgangritzel und einem Schnellgangzahnrad, welche einem Kurbeltrieb zugeordnet sind, sowie einem Lastgangzahnrad und einem Schnellgangritzel ausgebildet ist, auf welche mittels schaltbarer Kupplungselemente alternativ der Kraftfluss vom Kurbeltrieb über das Lastgangritzel auf das Lastgangzahnrad oder vom Kurbeltrieb über Schnellgangzahnrad auf das Schnellgangritzel erfolgt, und wobei auf einer Abtriebswelle eine Reitertriebeinheit drehbar gelagert ist, die das Schnellgangritzel und ein Schnellgangkegelritzel aufweist, welche mittels eines Verbindungsteils drehfest miteinander verbunden sind. Bei der vorgeschlagenen Stütze ist es möglich den Kurbeltrieb in bekannter Weise tiefer anzuordnen als die Abtriebswelle ihres Getriebes. Vorzugsweise kann das Schnellgangritzel an einer Reitertriebeinheit sitzen, die auch ein drehfestes Kegelritzel für den Schnellgang bzw. Schnellgangkegelritzel aufweisen kann. Vorteilhafterweise ist die Reitertriebeinheit drehbar auf der Abtriebswelle gelagert.

Vorzugsweise ist die Reitertriebeinheit einstückig ausgebildet.

Bevorzugterweise weisen die Reitertriebeinheit und die Abtriebswelle dieselbe Rotationsachse auf. Es kann eine Achsgleichheit zwischen Reitertriebeinheit und Abtriebswelle vorgesehen sein, sodass die Reitertriebeinheit und die Abtriebswelle dieselbe Rotationsachse aufweisen.

Die Achsgleichheit von Abtriebswelle und Reitertriebeinheit ermöglicht zweckmäßigerweise den Eingriff des Schnellgangkegelritzels in eine durchmesserkleinere Kegelradverzahnung.

Vorteilhafterweise greift das Schnellgangkegelritzel in eine durchmesserkleine Kegelradverzahnung ein, die drehfest mit der Spindel verbunden ist.

Zweckmäßigerweise sitzt das Lastgangzahnrad drehfest auf der Abtriebswelle.

In einer bevorzugten Ausführungsform sitzt ein Lastgangkegelritzel drehfest auf der Abtriebswelle, welches vorzugsweise in eine durchmessergroße Kegelradverzahnung eingreift, die drehfest mit der Spindel verbunden ist.

Vorteilhafterweise ist die Reitertriebeinheit zwischen Lastgangzahnrad und Lastgangkegelritzel angeordnet.

Vorzugsweise ist die durchmesserkleine Kegelradverzahnung konzentrisch zu einer durchmessergroßen Kegelradverzahnung angeordnet. Die durchmesserkleinere Kegelradverzahnung kann konzentrisch zu einer durchmessergrößeren Kegelradverzahnung angeordnet sein, welche im Lastgang zum Antreiben des Spindeltriebs benutzt wird. Damit sind getriebe- und übersetzungsmäßig die Voraussetzungen auch für einen erhöhten Schnellgang geschaffen.

Zweckmäßigerweise steht der Kurbeltrieb mit dem Lastgangritzel und mit einer Mitnahmeeinrichtung für das konzentrisch dazu angeordnete Schnellgangzahnrad in Verbindung.

Vorteilhafterweise zeigt der Kurbeltrieb axial richtungsmäßig auf die Spindel.

Weitere Vorteile und Merkmale der Erfindung ergeben sich aus der nachfolgenden Beschreibung von bevorzugten Ausführungsformen mit Bezug auf die Figuren, wobei einzelne Merkmale von verschiedenen Ausführungsformen zu neuen Ausführungsformen kombiniert werden können: Es zeigen:
- Fig.1: eine Vorderansicht einer Ausführungsform der erfindungsgemäßen Stütze.
- Fig.2: eine Seitenansicht der in Fig.1 gezeigten Stütze.
- Fig.3: einen schematischen Längsschnitt einer Ausführungsform der erfindungsgemäßen Stütze entlang einer Linie A-A der in Fig.1 gezeigten Stütze.

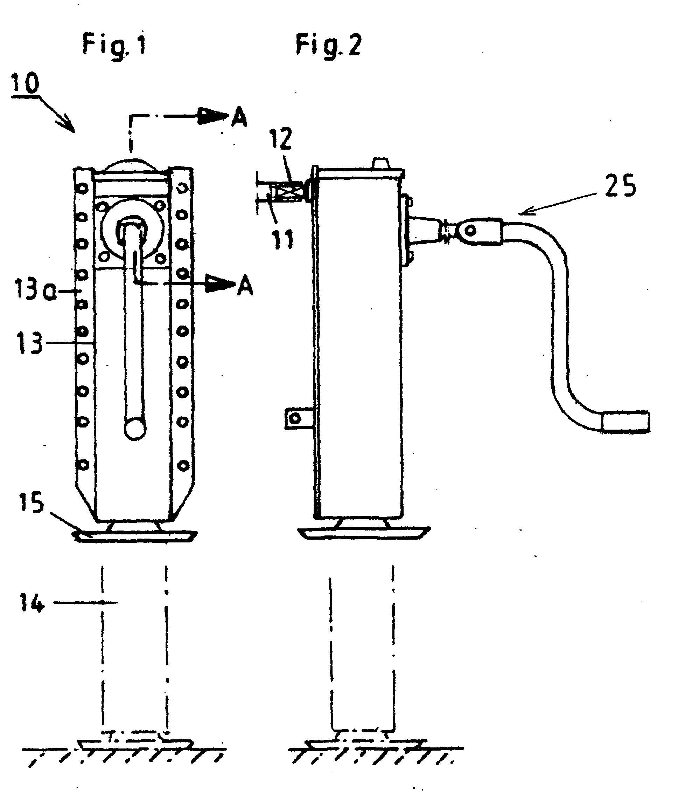

Die in **Fig.1** und **Fig. 2** gezeigte Stütze 10 wird paarweise am Chassis eines Sattelaufliegers in dessen vorderen Bereich befestigt. Die Stützen 10 eines jeden Paares sind mittels einer Verbindungswelle 11 an ihren Abtriebswellen 12 miteinander verbunden und in Transportstellung eingefahren, d.h. in verkürztem Zustand. Vor dem Abkoppeln des Sattelaufliegers vom Sattelschlepper werden die Stützen 10 ausgefahren. Die Stütze 10 weist ein Stützenaußenrohr bzw. einen Schaftrohrkörper 13 und ein darin längsverschiebbar angeordnetes Stützeninnenrohr 14 auf. Der Innenbereich des Schaftrohrkörpers 13 und das Stützeninnenrohr 14 besitzen vorzugsweise quadratische Querschnitte. Die Stütze 10 wird zweckmäßigerweise über am Schaftrohrkörper 13 befindliche Anflanschschenkel 13a am Sattelaufliegerrahmen befestigt. Am unteren Ende des Stützeninnenrohres 14 ist ein Fuß 15 zum Aufsetzen auf den Boden angeordnet bzw. befestigt.

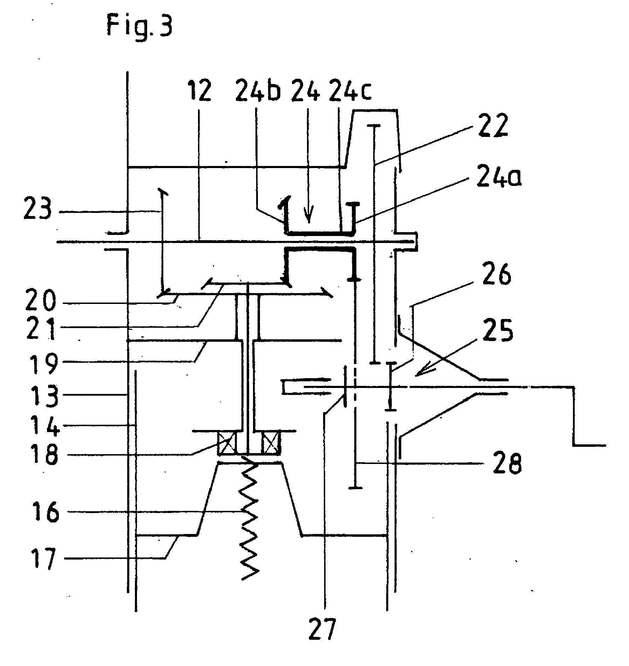

Wie **Fig. 3** zeigt, weist die Stütze 10 eine Spindel 16 mit einer Mutter 17 auf. Die Mutter 17 ist mit dem Stützeninnenrohr 14 verbunden. Auf der Schulter der Spindel 16 sitzt ein Axiallager 18 das sich an einem im Schaftrohrkörper 13 befestigten Lasttragboden 19 abstützt. Oberhalb des Lasttragbodens 19 befinden sich, in konzentrischer tellerradgemäßer Anordnung und drehfest mit der Spindel 16 verbunden ein durchmessergroßes Kegelrad bzw. eine durchmessergroße Kegelradverzahnung 20 und ein durchmesserkleines Kegelrad bzw. eine durchmesserkleine Kegelradverzahnung 21. Über den Kegelradverzahnungen 20, 21 ist die Abtriebswelle 12 angeordnet. Auf der Abtriebswelle 12 sitzen jeweils drehfest vorn ein Lastgangzahnrad 22 und hinten ein Lastgangkegelritzel 23. Dazwischen ist auf der Abtriebswelle 12 eine Reitertriebeinheit 24 drehbar gelagert. Die Reitertriebeinheit 24 weist ein Schnellgangritzel 24a und dazu beanstandet ein Schnellgangkegelritzel 24b auf, die mittels eines Verbindungsteils 24c drehfest miteinander verbunden sind. Im vorderen Bereich des Schaftrohrkörpers 13 und unterhalb der Abtriebswelle 12 befindet sich ein axial verschiebbarer Kurbeltrieb 25. Der Kurbeltrieb 25 steht in Verbindung mit einem Lastgangritzel 26 und mit einer Mitnahmeeinrichtung 27 für ein konzentrisch dazu angeordnetes Schnellgangzahnrad 28.

Die Getriebefunktion der Stütze 10 wird wie nachfolgend beschrieben: In Fig. 3 wird das Getriebe im freigeschalteten Zustand dargestellt. Dabei ist der Kurbeltrieb 25 in der Leerlaufstellung.

Zum Einschalten des Schnellgangs wird der Kurbeltrieb 25 axial etwas nach außen gezogen. Dabei greift die Mitnahmeeinrichtung 27 in das Schnellgangzahnrad 28 ein und eine Axialfixierung (nicht dargestellt) des Kurbeltriebs 25 rastet ein. Beim Drehen am Kurbeltrieb 25 wird das Drehmoment vom Schnellgangzahnrad 28 auf das Schnellgangritzel 24a der Reitertriebeinheit 24 mit einer Übersetzung ins Schnelle übertragen und dann vom Schnellgangkegelritzel 24b auf die durchmesserkleine Kegelradverzahnung 21 weitergeführt, um die Spindel 16 anzutreiben. Hierdurch werden die Mutter 17 sowie das Stützeninnenrohr 14 schnell bewegt.

Für den Lastgangbetrieb wird der Kurbeltrieb 25 bis zu seiner axialen Einrastung eingeschoben, wodurch das Lastgangritzel 26 mit dem Lastgangzahnrad 22 in Eingriff gelangt. Bei Betätigung des Kurbeltriebs 25 erfolgt der Kraftfluß vom Lastgangritzel 26 auf das Lastgangzahnrad 22 ins Langsame. Die Abtriebswelle 12 überträgt dann das erhöhte Drehmoment auf das Lastgangkegelritzel 23. Das Lastgangkegelritzel 23 treibt, in die durchmessergroße Kegelradverzahnung 20 eingreifend, übersetzungsmäßig nochmals ins Langsame wirkend die Spindel 16 an.

### Bezugszeichenliste

- 10: Stütze
- 11: Verbindungswelle
- 12: Abtriebswelle
- 13: Schaftrohrkörper
- 13a: Anflanschschenkel
- 14: Stützeninnenrohr
- 15: Fuß
- 16: Spindel
- 17: Mutter
- 18: Axiallager
- 19: Lasttragboden
- 20: Kegelradverzahnung
- 21: Kegelradverzahnung
- 22: Lastgangzahnrad
- 23: Lastgangkegelritzel
- 24: Reitertriebeinheit
- 24a: Schnellgangritzel
- 24b: Schnellgangkegelritzel
- 24c: Verbindungsteil
- 25: Kurbeltrieb
- 26: Lastgangritzel
- 27: Mitnahmeeinrichtung
- 28: Schnellgangzahnrad

## Patentansprüche

1. Höhenverstellbare Stütze (10) für Sattelauflieger oder dergleichen, umfassend einen an einem Chassis eines Sattelaufliegers befestigbaren Schaftrohrkörper (13), ein im Schaftrohrkörper (13) angeordnetes verschiebbares Stützeninnenrohr (14), an dessen unteren Endbereich ein Fuss (15) befestigt ist und das mit einer Mutter (17) verbunden ist, die sich auf einer Spindel (16) befindet, welche über ein Getriebe antreibbar ist,
wobei das Getreibe einen schaltbaren Stirnzahnräderbereich und Kegelradanordnungen aufweist,
wobei ein Schaltungsbereich des Getriebes aus einem Lastgangritzel (26) und einem Schnellgangzahnrad (28), welche einem Kurbeltrieb (25) zugeordnet sind, sowie einem Lastgangzahnrad (22) und einem Schnellgangritzel (24a) ausgebildet ist, auf welche mittels schaltbarer Kupplungselemente alternativ der Kraftfluss vom Kurbeltrieb (25) über das Lastgangritzel (26) auf das Lastgangzahnrad (22) oder vom Kurbeltrieb (25) über Schnellgangzahnrad (28) auf das Schnellgangritzel (24a) erfolgt, **dadurch gekennzeichnet, daß** auf einer Abtriebswelle (12) eine Reitertriebeinheit (24) drehbar gelagert ist, die das Schnellgangritzel (24a) und ein Schnellgangkegelritzel (24b) aufweist, welche mittels eines Verbindungsteils (24c) drehfest miteinander verbunden sind.

2. Stütze nach Anspruch 1, wobei die Reitertriebeinheit (24) einstückig ausgebildet ist.

3. Stütze nach einem der vorhergehenden Ansprüche, wobei die Reitertriebeinheit (24) und die Abtriebswelle (12) dieselbe Rotationsachse aufweisen.

4. Stütze nach einem der vorhergehenden Ansprüche, wobei das Schnellgangkegelritzel (24b) in eine durchmesserkleine Kegelradverzahnung (21) eingreift, die drehfest mit der Spindel (16) verbunden ist.

5. Stütze nach einem der vorhergehenden Ansprüche, wobei das Lastgangzahnrad (22) drehfest auf der Abtriebswelle (12) sitzt.

6. Stütze nach einem der vorhergehenden Ansprüche, wobei ein Lastgangkegelritzel (23) drehfest auf der Abtriebswelle (12) sitzt, welches vorzugsweise in eine durchmessergroße Kegelradverzahnung (20) eingreift, die drehfest mit der Spindel (16) verbunden ist.

7. Stütze nach Anspruch 6, wobei die Reitertriebeinheit (24) zwischen Lastgangzahnrad (22) und Lastgangkegelritzel (23) angeordnet ist.

8. Stütze nach einem der vorhergehenden Ansprüche, wobei die durchmesserkleine Kegelradverzahnung (21) konzentrisch zu einer durchmessergroßen Kegelradverzahnung (20) angeordnet ist.

9. Stütze nach einem der vorhergehenden Ansprüche, wobei der Kurbeltrieb (25) mit dem Lastgangritzel (26) und mit einer Mitnahmeeinrichtung (27) für das konzentrisch dazu angeordnete Schnellgangzahnrad (28) in Verbindung steht.

10. Stütze nach einem der vorhergehenden Ansprüche, wobei der Kurbeltrieb (25) axial richtungsmäßig auf die Spindel (16) zeigt.

## Claims

1. A height-adjustable support (10) for semi-trailers or the like, comprising a shaft tube body (13) mountable on a chassis of a semi-trailer, a slidable support inner tube (14) arranged in the shaft tube body (13), at whose lower end region a foot (15) is mounted and which is connected by means of a nut (17) located on a spindle (16) which is drivable by means of a transmission,
wherein the transmission has a switchable spur gear region and bevel gear assemblies,
wherein a switching region of the transmission is formed from a low-gear pinion (26) and a fast-gear gearwheel (28) which are attributed to a crank drive (25), as well as a low-gear gearwheel (22) and a fast-gear pinion (24a), to which alternatively by means of clutch coupling elements power is transmitted from the crank drive (25) via the low-gear pinion (26) to the low-gear gearwheel (22) or from the crank drive (25) via the fast-gear gearwheel (28) to the fast-gear pinion (24a), **characterized in that**
on an output shaft (12) a tab drive unit (24) is supported in a rotatable manner, which tab drive unit (24) comprises the fast-gear pinion (24a) and a fast-gear bevel pinion (24b) which are connected to one another in an unrotatable manner by means of a connecting member (24c).

2. The support according to claim 1, wherein the tab drive unit (24) is formed as a single piece.

3. The support according to any one of the preceding claims, wherein the tab drive unit (24) and the output shaft (12) have the same axis of rotation.

4. The support according to any one of the preceding claims, wherein the fast-gear bevel pinion (24b) engages with a small-diameter bevel gear toothing (21) which is connected with the spindle (16) in an unrotatable manner.

5. The support according to any one of the preceding claims, wherein the low-gear gearwheel (22) is seated on the output shaft (12) in an unrotatable manner.

6. The support according to any one of the preceding claims, wherein a low-gear bevel pinion (23) is seated on the output shaft (12) in an unrotatable manner, which low-gear bevel pinion (23) preferably engages with a large-diameter bevel gear toothing (20) which is connected to the spindle (16) in an unrotatable manner.

7. The support according to claim 6, wherein the tab drive unit (24) is arranged between the low-gear gearwheel (22) and the low-gear bevel pinion (23).

8. The support according to any one of the preceding claims, wherein the small-diameter bevel gear toothing (21) is arranged concentrically to a large-diameter bevel gear toothing (20).

9. The support according to any one of the preceding claims, wherein the crank drive (25) is in connection with the low-gear pinion (26) and with a carrier device (27) for the fast-gear gearwheel (28) arranged concentrically thereto.

10. The support according to any one of the preceding claims, wherein the crank drive (25) points axially towards the spindle (16).

## Revendications

1. Support réglable en hauteur (10) pour semi-remorque ou similaire, comprenant un corps à fût tubulaire (13) à fixer sur un châssis d'un semi-remorque,
un tube intérieur de soutien (14) déplaçable et agencé dans le corps à fût tubulaire (13), dans la région d'extrémité inférieure duquel est fixé un pied (15) et qui est relié à un écrou (17) qui se trouve sur une broche (16), laquelle peut être entraînée via un mécanisme,
dans lequel le mécanisme comprend une zone commutable formant engrenage droit et des agencements à engrenages coniques,
dans lequel une zone de commutation du mécanisme est formée par un pignon à un fonctionnement sous charge (26) et par un engrenage à marche rapide (28), lesquels sont associés à un mécanisme à manivelle (25), ainsi que par un engrenage à fonctionnement sous charge (22) et par un pignon à marche rapide (24a), via lesquels, au moyen d'éléments d'accouplement commutables, le flux des efforts a lieu alternativement depuis le mécanisme à manivelle (25) via le pignon à fonctionnement sous charge (26) vers l'engrenage à fonctionnement sous charge (22), ou bien depuis le mécanisme à manivelle (25) via l'engrenage à marche rapide (28) vers le pignon à marche rapide (24a),
**caractérisé en ce qu'**une unité d'entraînement à ergot (24) est montée en rotation sur un arbre mené (12), unité qui comprend le pignon à marche rapide (24a) et un pignon conique à marche rapide (24b), lesquels sont reliés solidairement en rotation l'un à l'autre au moyen d'une pièce de liaison (24c).

2. Support selon la revendication 1, dans lequel l'unité d'entraînement à ergot (24) est réalisée d'un seul tenant.

3. Support selon l'une des revendications précédentes, dans lequel l'unité d'entraînement à ergot (24) et l'arbre mené (12) ont le même axe de rotation.

4. Support selon l'une des revendications précédentes, dans lequel le pignon conique à marche rapide (24b) engrène dans une denture de roue conique (21) à petit diamètre, qui est reliée solidairement en rotation avec la broche (16).

5. Support selon l'une des revendications précédentes, dans lequel l'engrenage à fonctionnement sous charge (22) est calé solidairement en rotation sur l'arbre mené (12).

6. Support selon l'une des revendications précédentes, dans lequel un pignon conique à fonctionnement sous charge (23) est calé solidairement en rotation sur l'arbre mené (12), lequel s'engage de préférence dans une denture de roue conique (20) à grand diamètre, qui est reliée solidairement en rotation avec la broche (16).

7. Support selon la revendication 6, dans lequel l'unité d'entraînement à ergot (24) est agencée entre l'engrenage à fonctionnement sous charge (22) et le pignon conique à fonctionnement sous charge (23).

8. Support selon l'une des revendications précédentes, dans lequel la denture de roue conique (21) à petit diamètre est agencée concentriquement à une denture de roue conique (20) à grand diamètre.

9. Support selon l'une des revendications précédentes, dans lequel le mécanisme à manivelle (25) est en liaison avec le pignon à fonctionnement sous charge (26), et avec un système d'entraînement (27) pour l'engrenage à marche rapide agencé concentriquement à celui-ci.

10. Support selon l'une des revendications précédentes, dans lequel le mécanisme à manivelle (25) est orienté axialement en direction de la broche (16).
